# EUROPÄISCHE PATENTANMELDUNG

(11) **EP 1 990 249 A2**
(43) Veröffentlichungstag der Anmeldung: **12.11.2008**
(21) Anmeldenummer: 08450069.3
(22) Anmeldetag: 06.05.2008
(51) Int. Cl.: B60T 13/26, B60T 17/06

(54) **Druckbehälter zur Montage an einem Fahrzeug**

(30) Priorität: 10.05.2007 AT 2912007 U
(71) Anmelder: Alutech Gesellschaft m.b.H., 5651 Lend (AT)
(72) Erfinder: Busskamp, Daniel, 5722 Niedersill (AT)
(74) Vertreter: Weiser, Andreas

(57) **Zusammenfassung**

Druckbehälter (1) zur Montage an einem Fahrzeug, insbesondere Druckluftbehälter für Druckluftbremsen, mit einem Mantel (2) in Form eines flachen Kissens, dessen Flachseiten (4, 5) mittels zumindest eines das Behälterinnere (6) durchsetzenden Spannelementes (7) gegeneinandergespannt sind, wobei das Spannelement (7) eine in Richtung normal zu den Flachseiten (4, 5) langgestreckte Form hat.

## Beschreibung

Die vorliegende Erfindung betrifft einen Druckbehälter zur Montage an einem Fahrzeug, insbesondere Druckluftbehälter für Druckluftbremsen, mit einem Mantel in Form eines flachen Kissens, dessen Flachseiten mittels zumindest eines das Behälterinnere durchsetzenden Spannelementes gegeneinandergespannt sind.

Druckluftbehälter für Fahrzeuge werden meist in Form von Zylindern mit kalottenförmigen Stirnseiten ausgeführt, um möglichst hohen Innendrücken widerstehen zu können. Diese Bauform hat jedoch den Nachteil, daß der in der Regel parallelepipedisch zur Verfügung stehende Einbauraum nicht optimal ausgenutzt werden kann.

Aus der JP 2005-15576 ist ein flacher Druckluftbehälter bekannt, welcher aus mehreren parallelen Rohrsegmenten zusammengebaut ist, zwischen denen abschnittsweise Trennwände verlaufen, die die Flachseiten des Behälters miteinander verbinden. Die Trennwände bedeuten einen hohen Materialverbrauch, erhöhtes Gewicht und erfordern zahlreiche lange Verbindungsnähte bei der Fertigung.

Die Erfindung setzt sich zum Ziel, einen Druckbehälter mit optimiertem Platzbedarf zu schaffen, welcher die genannten Nachteile überwindet. Dieses Ziel wird mit einem Druckbehälter der eingangs genannten Art erreicht, welcher sich erfindungsgemäß dadurch auszeichnet, daß das genannte zumindest eine Spannelement eine in Richtung normal zu den Flachseiten langgestreckte Form hat.

Auf diese Weise wird erstmals ein kissenförmiger Druckbehälter geschaffen, der parallelepipedische Einbauräume optimal ausnutzen kann, ohne daß Einbußen an Druckfestigkeit und Formstabilität hinzunehmen wären. Der erfindungsgemäße Druckbehälter stellt mit geringstem Materialverbrauch bei gleichem Einbauplatzbedarf ein größeres Innenvolumen zur Verfügung als beispielsweise Gruppen herkömmlicher zylinderförmiger Behälter, während seine Spannelemente vergleichbar hohe Innendrücke gewährleisten.

Gemäß einer bevorzugten Ausführungsform der Erfindung sind die Spannelemente röhrenförmig, was besonders hohe Stabilität bei reduziertem Gewicht gewährleistet.

Die Spannelemente können alternativ auch Band- oder Stabform haben, um den Materialverbrauch zu minimieren und das ausnützbare Innenvolumen zu maximieren.

Die Spannelemente können auf beliebige Art und Weise am Mantel angreifen bzw. mit diesem verbunden sein, beispielsweise durch Schrauben, Löten, Kleben usw. Besonders bevorzugt sind die Spannelemente mit dem Mantel verschweißt, wodurch hohe Festigkeit bei einfacher Montage erreicht werden kann.

Der Mantel und die Spannelemente können beispielsweise aus Kunststoff gefertigt werden; bevorzugt werden sie aus Metall gefertigt, was hohe Festigkeit mit geringem Gewicht verbindet.

Besonders vorteilhaft ist es, wenn der Mantel und die Spannelemente aus dünnwandigem Aluminiumblech gefertigt sind, wodurch sich ein leichtgewichtiges, dünnwandiges Kissen ergibt, das durch den Innendruck und seine inneren Spannelemente in Form gehalten wird.

Die Erfindung wird nachstehend anhand eines in den beigeschlossenen Zeichnungen dargestellten Ausführungsbeispieles näher erläutert. In den Zeichnungen zeigt
Fig. 1 den Druckbehälter der Erfindung in einer Perspektivansicht;
Fig. 2 den Druckbehälter von Fig. 1 im Schnitt; und
Fig. 3 den Einsatz mehrerer Druckbehälter in einem ausschnittsweise dargestellten Fahrzeugrahmen.

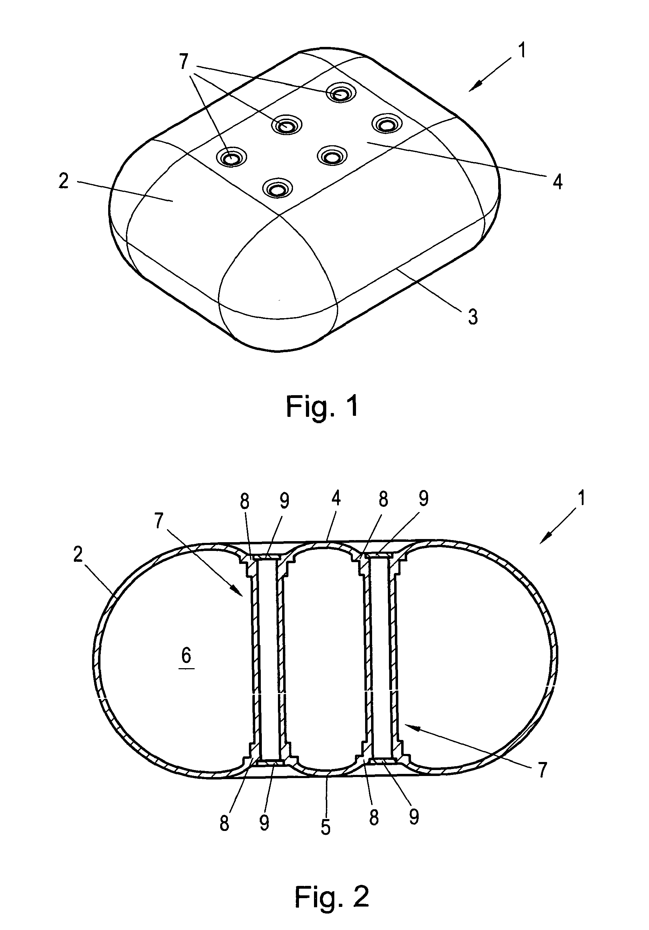

Gemäß den Fig. 1 und 2 besitzt ein Druckbehälter 1 einen Mantel 2 in Form eines flachen Kissens mit - von oben gesehen - etwa abgerundet-rechteckigem Umfang 3. Die Flachseiten 4, 5 des Mantels 2 sind mittels sechs das Behälterinnere 6 durchsetzender Spannelemente 7 gegeneinander gespannt. Die Anzahl der Spannelemente 7 ist variabel und wird bevorzugt entsprechend der Behältergröße gewählt, um die genannte Flachkissenform zu gewährleisten; bei kleinen Behältern kann z.B. auch nur ein einziges Spannelement 7 verwendet werden.

Die Spannelemente 7 haben - wie dargestellt - eine in Richtung normal zu den Flachseiten 4, 5 langgestreckte Form und sind bevorzugt röhrenförmig, z.B. durch Strangpressen hergestellt. Die Röhrenenden 8 der Spannelemente 7 sind mit dem Behältermantel 2 über ihren Umfang verklebt, verlötet, verschraubt usw., bevorzugt verschweißt. Optional können Abdeckkappen 9 in die Röhrenenden 8 eingesetzt sein, um die Formstabilität der Spannelemente 7 zu erhöhen.

Alternativ können die Spannelemente 7 beliebige andere Querschnittsform haben, beispielsweise Band- oder Stabform,

Der Druckbehälter 1, d.h. sein Mantel 2, die Spannelemente 7 und die Abdeckkappen 9 können aus Kunststoff oder bevorzugt Metall, besonders bevorzugt dünnwandigem Aluminiumblech, gefertigt sein.

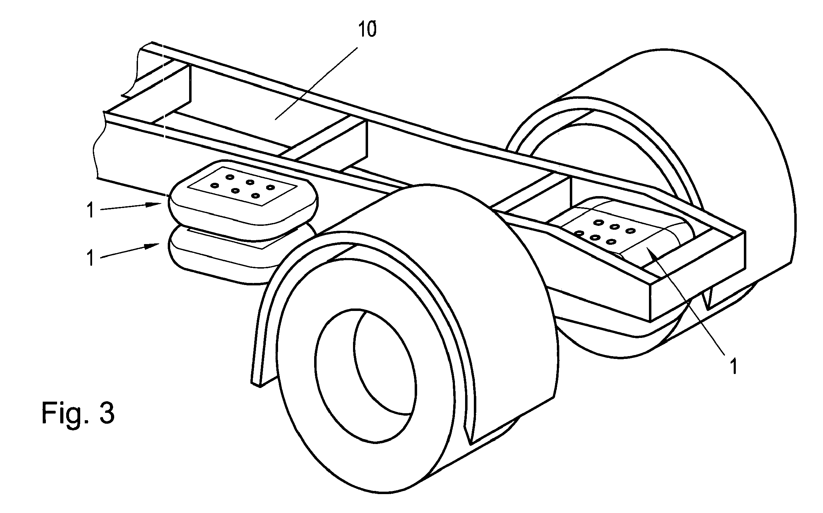

Fig. 3 zeigt den praktischen Einsatz von zwei Paaren von jeweils aufeinandergestapelten kissenförmigen Druckbehältern 1 bei einem ausschnittsweise dargestellten Fahrzeugrahmen 10. Wie ersichtlich, ergibt sich mit Hilfe der vorgestellten Druckbehälter 1 eine optimale Ausnutzung der im Fahrzeugrahmen zur Verfügung stehenden parallelepipedischen Einbauraumes.

Die Erfindung ist nicht auf die dargestellten Ausführungsformen beschränkt, sondern umfaßt alle Varianten und Modifikationen im Rahmen der angeschlossenen Ansprüche.

## Patentansprüche

1. Druckbehälter (1) zur Montage an einem Fahrzeug, insbesondere Druckluftbehälter für Druckluftbremsen, mit einem Mantel (2) in Form eines flachen Kissens, dessen Flachseiten (4, 5) mittels zumindest eines das Behälterinnere (6) durchsetzenden Spannelementes (7) gegeneinandergespannt sind, **dadurch gekennzeichnet, daß** das Spannelement (7) eine in Richtung normal zu den Flachseiten (4, 5) langgestreckte Form hat.

2. Druckbehälter nach Anspruch 1, **dadurch gekennzeichnet, daß** das Spannelement (7) röhrenförmig ist.

3. Druckbehälter nach Anspruch 1, **dadurch gekennzeichnet, daß** das Spannelement (7) Band- oder Stabform hat.

4. Druckbehälter nach einem der Ansprüche 1 bis 3, **dadurch gekennzeichnet, daß** das Spannelement (7) mit dem Mantel (2) verschweißt ist.

5. Druckbehälter nach einem der Ansprüche 1 bis 4, **dadurch gekennzeichnet, daß** der Mantel (2) und die Spannelemente (7) aus Metall gefertigt sind.

6. Druckbehälter nach einem der Ansprüche 1 bis 5, **dadurch gekennzeichnet, daß** der Mantel (2) und die Spannelemente (7) aus dünnwandigem Aluminiumblech gefertigt sind.
